# EUROPÄISCHE PATENTANMELDUNG

(11) **EP 4 194 323 A1**
(43) Veröffentlichungstag der Anmeldung: **14.06.2023**
(21) Anmeldenummer: 21213800.2
(22) Anmeldetag: 10.12.2021
(51) Int. Cl.: B62D 25/14, B62D 29/00

(54) **MODULQUERTRÄGER**

(71) Anmelder: Dura Automotive Systems GmbH, 58507 Lüdenscheid (DE)
(72) Erfinder: Schulze-Bergkamen, Burkhard, 44287 Dortmund (DE); Krehmke, Michael, 58840 Plettenberg (DE); Kahlert, Michael, 51580 Reichshof (DE); Thubauville, Andre, 58515 Lüdenscheid (DE); Rau, Holger, 51580 Reichshof (DE)
(74) Vertreter: btb IP Bungartz Baltzer Partnerschaft mbB Patentanwälte

(57) **Zusammenfassung**

Die Erfindung betrifft einen Modulquerträger für ein Kraftfahrzeug mit einem ersten Querträgerabschnitt und einem zweiten Querträgerabschnitt, wobei ein Verbindungsende des ersten Querträgerabschnitts und ein Verbindungsende des zweiten Querträgerabschnitt in einem Verstärkungsbereich zumindest mittelbar miteinander verbunden sind, wobei die Verbindungsenden der Querträgerabschnitte jeweils aus einem ersten Material gebildet sind.

Um einen Querträger bereitzustellen, der eine hohe Steifigkeit und Festigkeit bei gleichzeitig geringem Gewicht aufweist, ist vorgesehen, dass im Verstärkungsbereich ein Verstärkungselement zwischen den Verbindungsenden angeordnet, wobei das Verstärkungselement zumindest teilweise aus einem im Vergleich zum ersten Material zweiten höherfesten Material gebildet ist.

## Beschreibung

Die Erfindung betrifft einen Modulquerträger für ein Kraftfahrzeug mit einem ersten Querträgerabschnitt und einem zweiten Querträgerabschnitt, wobei ein Verbindungsende des ersten Querträgerabschnitts und ein Verbindungsende des zweiten Querträgerabschnitt in einem Verstärkungsbereich zumindest mittelbar miteinander verbunden sind, wobei die Verbindungsenden der Querträgerabschnitte jeweils aus einem ersten Leichtbaumaterial Material gebildet sind. Insbesondere sind die Querträgerabschnitte aus Aluminium gefertigt.

Modulquerträger bzw. Cockpit-Querträger sind im Fahrzeug unterhalb des Scheibenträgers und zwischen den beiden sogenannten A-Säulen angeordnet. An dem Modulquerträger sind verschiedene Aufnahmen und Halterung vorgesehen, an denen die Instrumententafel, die Lenksäule, Heizungs- und/oder Lüftungsmodule, Airbags, ein Handschuhkasten und/oder eine Mittelkonsole sowie weitere Anbauteile montiert werden.

Modulquerträger dieser Art werden zur Gewichtsreduktion ganz oder teilweise aus Leichtbaumaterialien gefertigt. Beispielsweise beschreibt die Offenlegungsschrift DE 10 2008 026 138 A1 einen (material-)hybriden Modulquerträger, bei dem der fahrerseitige Querträger aus Stahl und der beifahrerseitige Querträger aus Aluminium gefertigt sind.

Die Offenlegungsschrift DE 10 2014 003 143 A1 beschreibt einen Querträger aus einem Leichtbaumaterial mit einem mittig angeordneten Deformationselement aus demselben Material, welches zwei gegenüberliegende Grundplatten und mehrere sich zwischen den Grundplatten erstreckende Stege aufweist, wobei die Stege unterschiedliche, an die zu erwartende Krafteinwirkung auf den Querträger angepasste Formen aufweisen.

Durch die vollständige Elektrifizierung des Antriebsstrang und die damit einhergehende Reduzierung von Bauteilen, insbesondere im Motorraum, ergeben sich veränderte Anforderungen in Bezug auf die Crashsicherheit an die an den Fahrzeuginnenraum angrenzenden Bauteile.

Im Falle eines Aufpralls soll vermieden werden, dass der Modulquerträger sich zu stark deformiert und Teile in den Innenraum des Fahrzeugs eindringen. Dazu muss der Modulquerträger eine definierte Last innerhalb eines zulässigen Deformationsweges ertragen. Zur Auslegung solcher Komponenten werden unter anderem 3-Punkt- Biegeversuche durchgeführt, bei denen der Modulquerträger an beiden Enden eingespannt ist und mittels einer Kraft F, in einem Anwendungsfall mit 15 kN, beaufschlagt wird. Die zulässige Eindringtiefe bzw. Deformation darf einen definierten Schwellwert nicht überschreiten. Bekannte Modulquerträger aus Leichtbaumaterialien erfüllen diese Anforderungen im gegebenen Bauraum nicht und stoßen bei gegebenem, begrenzten Bauraum in Bezug auf Festigkeit und Steifigkeit an ihre Grenzen, sodass auf hochfeste Materialien wie z.B. Stahl zurückgegriffen werden muss.

Aufgabe der Erfindung ist es daher, einen Querträger bereitzustellen, der bei einer einem Crash-Lastfall entsprechenden hohen (Biege-)Last eine hohe Steifigkeit und Festigkeit bei gleichzeitig geringem Gewicht aufweist, sodass eine zulässige Eindringtiefe nicht überschritten wird.

Die Lösung der Aufgabe erfolgt erfindungsgemäß durch einen Modulquerträger mit den Merkmalen des Anspruchs 1. Bevorzugte Ausgestaltungen der Erfindung sind in den Unteransprüchen und der nachfolgenden Beschreibung angegeben, die jeweils einzeln oder in Kombination einen Aspekt der Erfindung darstellen können.

Erfindungsgemäß ist im Verstärkungsbereich ein Verstärkungselement zwischen den Verbindungsenden angeordnet, wobei das Verstärkungselement zumindest teilweise aus einem im Vergleich zum ersten Material zweiten höherfesten Material gebildet ist.

In einer besonders vorteilhaften Ausgestaltung der Erfindung sind die Verbindungsenden und im Wesentlichen der gesamte Modulquerträger zur Gewichtsreduktion aus einem Leichtbaumaterial, insbesondere aus einer Aluminiumlegierung gefertigt und das Verstärkungselements aus einem Stahl oder Faserverbundstoff gebildet.

Das Verstärkungselement und die Verbindungsenden sind dabei bevorzugt zueinander überlappend angeordnet. Beispielsweise kann vorgesehen sein, dass das Verstärkungselement auf das Verbindungsende des ersten und/ oder zweiten Querträgerabschnitts aufgesetzt ist. Bevorzugt ist das Verstärkungselement allerdings zumindest teilweise in das Verbindungsende des ersten Querträgerabschnitts und/oder das Verbindungsende des zweiten Querträgerabschnitts eingeschoben.

In einer vorteilhaften Ausgestaltung ist das Verstärkungselement als Einschubelement vollständig in das Verbindungsende des ersten Querträgerabschnitts eingeschoben. Ferner ist das Verbindungsende des ersten Querträgerabschnitts überlappend in das Verbindungsende des zweiten Querträgerabschnitts eingeschoben.

Um eine gute Montierbarkeit und kostengünstige Fertigung realisieren zu können, ist das Verstärkungselement bevorzugt als länglicher Hohlkörper gebildet. Der Querschnitt des Hohlkörpers kann dabei gerundet oder mehreckig sein.

Auch kann das Verstärkungselement mehrteilig ausgebildet sein.

Das Verstärkungselement ist an die Verbindungsenden der Querträgerabschnitte gefügt. Bevorzugt wird das Verstärkungselement verklebt, kann aber auch mit den Verbindungsenden verschraubt, verpresst oder vernietet sein. Die Bauteile können aber auch mittels eines thermischen Fügeverfahrens, beispielsweise durch eine CMT-Schweißverbindung miteinander verbunden werden.

Der Modulquerträger weist bevorzugt zwei Tunnelstützen auf, wobei eine erste Tunnelstütze mit dem ersten Querträgerabschnitt verbunden ist und eine zweite Tunnelstütze mit dem zweiten Querträgerabschnitt verbunden ist. Eine konstruktiv vorteilhafte Ausgestaltung des Modulquerträger sieht vor, dass am Verbindungsende des ersten Querträgerabschnitts die erste Tunnelstütze angeordnet ist, wobei das Verbindungsende des ersten Querträgerabschnitts eine Aufnahme aufweist, in die das Verstärkungselement und insbesondere auch das Verbindungsende des zweiten Querträgerabschnitts eingeschoben sind.

In einer besonders vorteilhaften Ausgestaltung ist vorgesehen, dass die Aufnahme bei bestimmungsgemäßer Montage des Modulquerträgers in Richtung Fahrzeugfront vor der ersten Tunnelstütze angeordnet ist. Hierdurch wird die Verbindungsstelle der Querträgerabschnitte zusätzlich durch die Tunnelstütze gestützt. Bevorzugt ist die Aufnahme auf das das Verbindungsende bildende Trägerprofil aufgesetzt. Das Trägerprofil befindet sich bevorzugt zwischen Aufnahme und erster Tunnelstütze.

Gleichermaßen betrifft die Erfindung auch ein Kraftfahrzeug, das durch einen erfindungsgemäßen Modulquerträger mit einem oder mehreren der zuvor beschriebenen Merkmalen gekennzeichnet ist.

Weitere Merkmale und Vorteile der Erfindung ergeben sich der nachfolgenden Beschreibung bevorzugter Ausführungsbeispiele anhand der Zeichnungen.

In den Zeichnungen zeigt:
- Fig. 1: eine perspektivische Ansicht eines Modulquerträger in einer ersten Ausführungsform,
- Fig. 2: eine Draufsicht des Modulquerträgers aus Fig. 1 in einem Biegeversucht,
- Fig. 3: einen Ausschnitt des Verstärkungsbereichs, und
- Fig. 4: eine perspektivische Ansicht eines Modulquerträger in einer zweiten Ausführungsform.

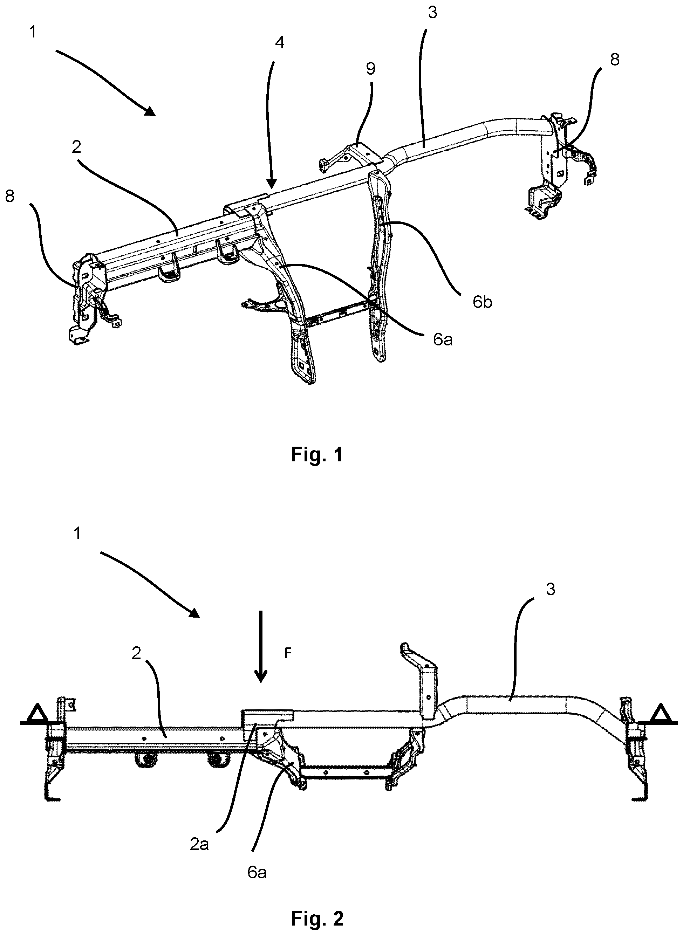

Der in Figur 1 in einer ersten Ausführungsform dargestellte erfindungsgemäße Modulquerträgers 1 für ein Personenkraftfahrzeug weist bei bestimmungsgemäßer Montage einen fahrerseitigen Querträgerabschnitt als ersten Querträgerabschnitt 2 und einen beifahrerseitigen Querträgerabschnitt als zweiten Querträgerabschnitt 3 auf. Der Modulquerträger 1 ist im montierten Zustand im Fahrzeug zwischen den A-Säulen angeordnet. Zur Befestigung an der Karosserie sind an den jeweiligen distalen Enden des Modulquerträgers Halterungen / Kulissen 8 vorgesehen.

Der fahrerseitige Querträgerabschnitt 2 und der beifahrerseitige Querträgerabschnitt 3 sind in der dargestellten Ausführungsform aus einem Aluminiummaterial gefertigt. Der zweite (beifahrerseitige) Querträgerabschnitt 3 ist als eine Rohrkonstruktion ausgeführt.

Im mittleren Bereich des Modulquerträgers 1 sind zwei Tunnelstützen 6a, 6b im Wesentlichen vertikal zur Längsrichtung des Modulquerträgers 1 angeordnet, wobei eine erste, fahrerseitige Tunnelstütze 6a an einem Verbindungsende des ersten Querträgerabschnitts 2 befestigt ist und eine zweite, beifahrerseitige Tunnelstütze am zweiten Querträgerabschnitt 3 befestigt ist.

Im Bereich der Anschlussstelle der fahrerseitigen Tunnelstütze 6a weist das Verbindungsende des ersten Querträgerabschnitt 2 eine Aufnahme 10 auf, in die das Verbindungsende des zweiten Querträgerabschnitts 3 eingeschoben ist.

Der Verbindungsbereich zwischen den beiden Querträgerabschnitten 2, 3 bildet einen Verstärkungsbereich. Zwischen den Verbindungsenden der Querträgerabschnitte 2, 3 ist ein Verstärkungselement 5 angeordnet. Dieses ist als Einschubelement ausgebildet und daher in der Figur 1 nicht zu erkennen.

Die fahrerseitige Tunnelstütze 6a und die beifahrerseitige Tunnelstütze 6b sind in ihrem unteren Bereich jeweils nach innen abgekröpft. In etwa in der Mitte ihrer Höhe sind sie durch ein Verbindungsstück 7 miteinander verbunden, welches bei bestimmungsgemäßer Montage im Wesentlichen horizontal verläuft.

Ferner ist am zweiten Querträgerabschnitt 3 im Bereich des Anschlusses der beifahrerseitige Tunnelstütze 6b eine Stirnwand-Abstützung 9 vorgesehen, die im Wesentlichen horizontal und quer zum beifahrerseitigen Querträgerendteil 3 verläuft.

In Figur 2 ist ein einem Frontalaufprall entsprechender Lastfall gezeigt. Der in Draufsicht gezeigte Modulquerträger aus Figur 1 ist an den Haltern 8 fest eingespannt und wird im Bereich der Aufnahme 10 im Verstärkungsbereich mit einer Last F beaufschlagt. Die Last F ist mit 15 kN hoch und der zulässige Eindringweg gering, so dass der Querträger eine hohe Steifigkeit und Festigkeit mit sich bringen muss, um den Lastfall zu ertragen. Entsprechend tritt die größte Last im Verbindungsbereich der beiden Querträgerabschnitte 2, 3 auf.

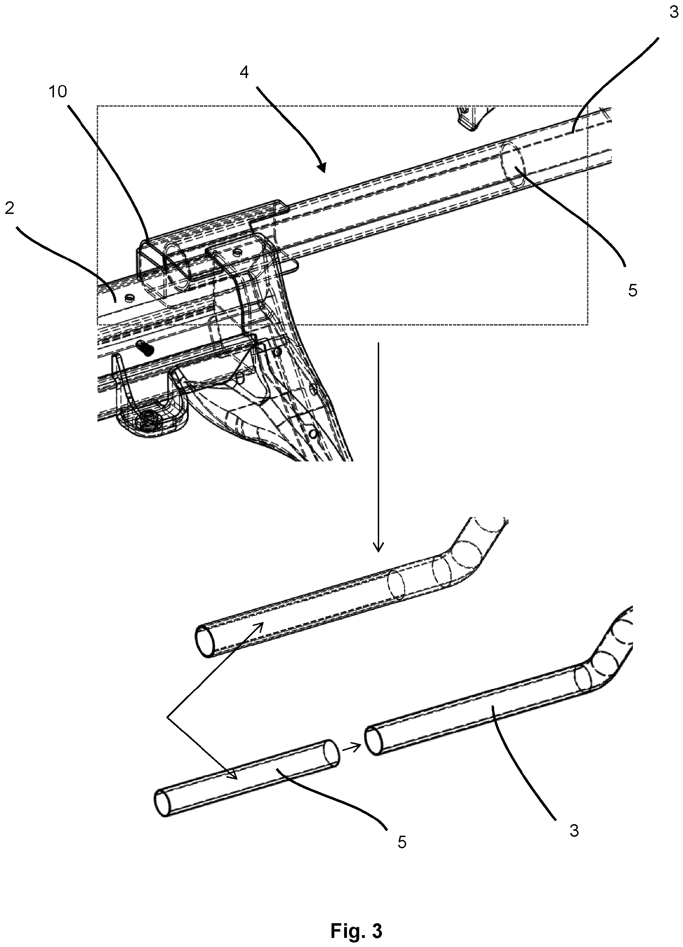

Die Figur 3 zeigt einen Ausschnitt des Verstärkungsbereichs des Modulquerträgers 1 gemäß der Ausführungsform aus Figur 1. In der schematischen Darstellung sind die außenliegenden Bauteile transparent abgebildet und das innenliegende als Einschubelement ausgebildete Verstärkungselement 5 zu erkennen.

Das Verbindungsende des rohrförmig ausgebildeten zweiten Querträgerabschnitts 3 ist in die am Verbindungsende des ersten Querträgerabschnitts 3 angeordnete Aufnahme 10 eingeschoben. Das Verstärkungselement 5 ist rohrförmig und ist vollständig in das rohrförmige Verbindungsende des zweiten Querträgerabschnitts 2 eingeschoben. Das Verstärkungselement 5 ist bevorzugt aus einem hochfesten Stahl oder einem Faserverbundwerkstoff gefertigt.

Am Verbindungsende des ersten Querträgerabschnitts 2 ist auch die Tunnelstütze 6a befestigt. Die Aufnahme 10 ist in der dargestellten bevorzugten Ausführungsform in bei bestimmungsgemäßer Montage des Modulquerträgers 1 in Richtung Fahrzeugfront vor der fahrerseitigen Tunnelstütze 6a angeordnet. Auf diese Weise wird die Verbindungsstelle der beiden Querträgerabschnitte 2, 3 bei einem Frontalaufprall zusätzlich durch die Tunnelstütze 6a gestützt.

Die Figur 3 zeigt ebenfalls einen Teil des zweiten Querträgerabschnitts 3, wobei der zum ersten Querträgerabschnitt 2 gerichtete und das Verbindungsende aufweisende Teil des Querträgerabschnitts durch ein gerades Rohr gebildet ist. In das Rohr ist das ebenfalls durch ein gerades Rohr gebildete Verstärkungselement 5 eingeschoben. Das Verstärkungselement 5 ist an dem zweiten Querträgerabschnitt befestigt und schließt bevorzugt bündig mit dem Verbindungsende des zweiten Querträgerabschnitts 3 ab.

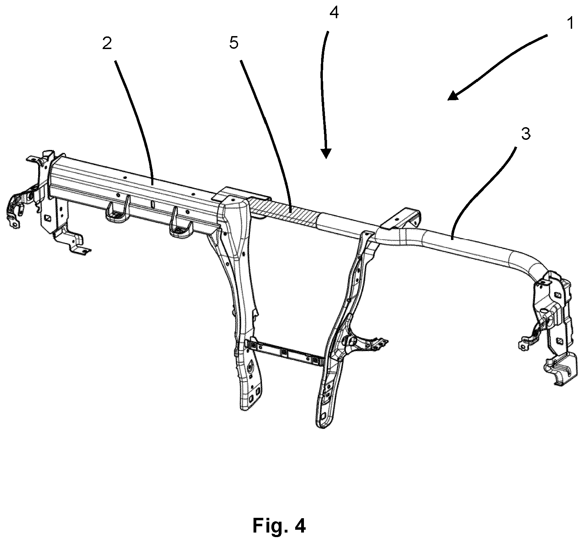

In Figur 4 ist eine zweite Ausführungsform des erfindungsgemäßen Modulquerträgers 1 gezeigt. Dessen Aufbau entspricht bis auf das Verstärkungselement 5 im Wesentlichen dem Modulquerträger 1 aus den Figuren 1 - 3. So weist der erste Querträgerabschnitt 2 und der zweite Querträgerabschnitt 3 jeweils eine Tunnelstützen auf und eine Aufnahme 10 ist wiederum am Verbindungsende des ersten Querträgerabschnitts 1 angeordnet.

Bei der zweiten Ausführungsform ist im hochbelasteten Bereich ein Teil des zweiten Querträgerabschnitts 3 durch ein Verstärkungselement 5 ersetzt. Die Verbindungsenden der beiden Querträgerabschnitten 2, 3 sind nicht direkt, sondern mittelbar über das Verstärkungselement 5 miteinander verbunden. Das Verstärkungselement 5 ist jeweils teilweise überlappend jeweils in die Verbindungsenden der Querträgerprofile 2, 3 eingeschoben und an diesen befestigt.

Das Verstärkungselement 5 ist als längliches Rechteckprofil ausgebildet. Das Verstärkungselement 5 kann aus einem hochfesten Stahl oder auch aus einem hochfesten Faserverbundwerkstoff gebildet sein.

### Bezugszeichenliste:

- 1: Modulquerträger
- 2: erster, fahrerseitige Querträgerabschnitt
- 3: zweiter, beifahrerseitiger Querträgerabschnitt
- 4: Verstärkungsbereich
- 5: Verstärkungselement
- 6a: erste, fahrerseitige Tunnelstütze
- 6b: zweite, beifahrerseitige Tunnelstütze
- 7: Verbindungsstück
- 8: Halter/ Kulissen
- 9: Stirnwand-Abstützung
- 10: Aufnahme

## Patentansprüche

1. Modulquerträger (1) für ein Kraftfahrzeug mit einem ersten Querträgerabschnitt (2) und einem zweiten Querträgerabschnitt (3), wobei ein Verbindungsende des ersten Querträgerabschnitts (2) und ein Verbindungsende des zweiten Querträgerabschnitt (3) in einem Verstärkungsbereich miteinander verbunden sind, wobei die Verbindungsenden der Querträgerabschnitte jeweils aus einem ersten Material gebildet sind, **dadurch gekennzeichnet, dass** im Verstärkungsbereich ein Verstärkungselement (5) zwischen den Verbindungsenden angeordnet ist, wobei das Verstärkungselement (5) zumindest teilweise aus einem im Vergleich zum ersten Material zweiten höherfesten Material gebildet ist.

2. Modulquerträger (1) nach Anspruch 1, **dadurch gekennzeichnet, dass** das erste Material der Verbindungsenden ein Leichtbaumaterial, insbesondere ein Aluminiummaterial ist, und das Verstärkungselements (5) aus einem Stahlmaterial oder Faserverbundstoff gebildet ist.

3. Modulquerträger (1) nach einem der vorhergehenden Ansprüche, **dadurch gekennzeichnet, dass** das Verstärkungselement (5) und die Verbindungsenden zueinander überlappend angeordnet sind.

4. Modulquerträger (1) nach einem der vorhergehenden Ansprüche, **dadurch gekennzeichnet, dass** das Verstärkungselement (5) zumindest teilweise in das Verbindungsende des ersten Querträgerabschnitts (2) und/oder das Verbindungsende des zweiten Querträgerabschnitts (3) eingeschoben ist.

5. Modulquerträger (1) nach einem der vorhergehenden Ansprüche, **dadurch gekennzeichnet, dass** das Verstärkungselement (5) als Einschubelement vollständig in das Verbindungsende des ersten Querträgerabschnitts (2) eingeschoben ist und das Verbindungsende des ersten Querträgerabschnitts (2) überlappend in das Verbindungsende des zweiten Querträgerabschnitts (2) eingeschoben ist.

6. Modulquerträger (1) nach einem der vorhergehenden Ansprüche, **dadurch gekennzeichnet, dass** das Verstärkungselement (5) einen länglichen Hohlkörper aufweist, dessen Querschnitt insbesondere rund oder rechteckig ist.

7. Modulquerträger (1) nach dem vorhergehenden Abschnitt, **dadurch gekennzeichnet, dass** der Hohlkörper einen über die Länge veränderlichen Querschnitt und/oder eine veränderliche Wandstärke aufweist.

8. Modulquerträger (2) nach einem der vorhergehenden Ansprüche, **dadurch gekennzeichnet, dass** das Verstärkungselement mehrteilig ausgebildet ist.

9. Modulquerträger (1) nach einem der vorhergehenden Ansprüche, **dadurch gekennzeichnet, dass** das Verstärkungselement (5) als Strangpressprofil gefertigt ist.

10. Modulquerträger (1) nach einem der vorhergehenden Ansprüche, **dadurch gekennzeichnet, dass** zur zusätzlichen Versteifung des Verstärkungselements (5) Verstrebungen innerhalb des Hohlkörpers vorgesehen sind.

11. Modulquerträger (1) nach einem der vorhergehenden Ansprüche, **dadurch gekennzeichnet, dass** das Verstärkungselement (5) mit den Querträgerabschnitten verklebt ist.

12. Modulquerträger (1) nach einem der vorhergehenden Ansprüche, **dadurch gekennzeichnet, dass** das Verstärkungselement (5) mit den Verbindungsenden der Querträgerabschnitten (2, 3) verschraubt oder vernietet ist.

13. Modulquerträger (1) nach einem der vorhergehenden Ansprüche, **dadurch gekennzeichnet, dass** am Verbindungsende des ersten Querträgerabschnitts (2) eine erste Tunnelstütze (6a) vorgesehen ist und am zweiten Querträgerabschnitt (3) eine zweite Tunnelstütze (6b) vorgesehen ist, wobei das Verbindungsende des ersten Querträgerabschnitts (2) eine Aufnahme (10) aufweist, in die das Verstärkungselement (5) und insbesondere auch das Verbindungsende des zweiten Querträgerabschnitts (3) eingeschoben ist.

14. Modulquerträger (1) nach dem vorhergehenden Anspruch, **dadurch gekennzeichnet, dass** die Aufnahme (10) bei bestimmungsgemäßer Montage des Modulquerträgers in Richtung Fahrzeugfront vor der ersten Tunnelstütze (6a) angeordnet ist.

15. Fahrzeug mit einem Modulquerträger nach einem der vorhergehenden Ansprüche.
